(19) 

Europäisches
Patentamt
European
Patent Office
Office européen
des brevets

(11) **EP 4 535 597 A1**

(12) **EUROPEAN PATENT APPLICATION**
published in accordance with Art. 153(4) EPC

(43) Date of publication:
**09.04.2025  Bulletin 2025/15**

(21) Application number: **22944041.7**

(22) Date of filing: **13.06.2022**

(51) International Patent Classification (IPC):
*H02J 7/00* (2006.01)

(52) Cooperative Patent Classification (CPC):
Y02E 70/30

(86) International application number:
**PCT/CN2022/098332**

(87) International publication number:
**WO 2023/231079 (07.12.2023 Gazette 2023/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.06.2022  CN 202210614837**

(71) Applicant: **Solax Power Network
Technology (Zhejiang) Co., Ltd.
Hangzhou, Zhejiang 311500 (CN)**

(72) Inventors:
• **LIU, Chaohou
  Hangzhou, Zhejiang 311500 (CN)**

• **AN, Tianhong
  Hangzhou, Zhejiang 311500 (CN)**
• **SHI, Xinmiao
  Hangzhou, Zhejiang 311500 (CN)**
• **GUAN, Haichao
  Hangzhou, Zhejiang 311500 (CN)**
• **WEI, Qikang
  Hangzhou, Zhejiang 311500 (CN)**

(74) Representative: **Zaboliene, Reda
Metida
Business center Vertas
Gyneju str. 16
01109 Vilnius (LT)**

(54) **CHARGE AND DISCHARGE POWER BALANCE DISTRIBUTION CONTROL METHOD FOR
PARALLEL SYSTEM FOR HYBRID ENERGY STORAGE INVERTERS**

(57)    The present application relates to technical field of hybrid energy storage inverter control, and discloses a charge and discharge power balance distribution control method for a hybrid energy storage inverter parallel connection system, the method comprises the following steps: setting one machine of the system as a host and other machines as slaves;: collecting the power of the grid-connected port of the parallel connection system, utility voltage, and output current of an inverter, and calculating output power of the inverter, and setting a power limit of the grid-connected port, obtaining the switch control signals of switch tube S2 and the switch tube based on the control loop ①, the control loop ②, the control loop ③ and the control loop ④, and controlling the switch tube S2 and the switch tube S3 to turn on and off, to control a battery charge and discharge current; the present application enables optimal use of the output energy of the photovoltaic modules within the parallel connection system and avoids energy waste.

FIG. 1

**Description**

TECHNICAL FIELD

The present application relates to the field of hybrid energy storage inverter control technology, and more specifically relates to a charge and discharge power balance distribution control method for a hybrid energy storage inverter parallel connection system.

BACKGROUND

A hybrid energy storage inverter based on photovoltaic and lithium batteries can meet the use of user loads when the photovoltaic energy is sufficient, and the excess energy can be stored in the battery for use when the energy of the photovoltaic module is weak, thereby realizing the purpose of self-generation and self-consumption, reducing the consumption of grid energy by the household loads of the user, and decreasing the electricity bill of the user. Therefore, the hybrid energy storage inverter is welcomed by many users, but for users with heavy domestic loads, the hybrid inverter with low power cannot meet the requirements, so the hybrid energy storage inverter parallel connection system becomes a good solution.

For the hybrid energy storage inverter parallel connection system, if the remaining battery power of each hybrid energy storage inverter in the parallel connection system is not balanced, some batteries run out of power in advance, when the user load is very large, because some batteries in the parallel connection system no longer have the ability to discharge, then the parallel connection system will not be able to provide enough energy to supply the load, and the excess energy needs to be taken from the utility, thereby causing losses to the user.

For the hybrid energy storage inverter parallel connection system, if the energy of the photovoltaic module of each hybrid energy storage inverter in the parallel connection system is not balanced, some photovoltaic modules have high output power, some photovoltaic modules have low output power, when the user load is small, the capacity of the photovoltaic module is sufficient, the energy of the photovoltaic module is prioritized to supply the load, and the excess energy is charged to the battery. when the charging of a machine battery with high output power of the photovoltaic module is limited, the output power of the photovoltaic module will be limited, while the charging of a machine battery with a low power output of the photovoltaic module is insufficient, which will result in a waste of energy of the photovoltaic module.

SUMMARY

An object of the present application is to provide a charge and discharge power balance distribution control method for a hybrid energy storage inverter parallel connection system to solve the above technical problems.

In order to solve the above technical problems, a specific technical solution of the present application for the charge and discharge power balance distribution control method for the hybrid energy storage inverter parallel connection system is as follows:

a charge and discharge power balance distribution control method for the hybrid energy storage inverter parallel connection system includes the following steps:

step 1, setting one machine of the hybrid energy storage inverter parallel connection system as a host and other machines as a slaves;

step 2, collecting power of a grid-connected port of the parallel connection system, utility voltage, and output current of an inverter, and calculating output power of the inverter;

step 3, setting a power limit of the grid-connected port, designing a control loop ①, and outputting a charge and discharge current percentage signal through the control loop ①;

step 4, calculating weight coefficient based on their respective battery capacity by each machine in the parallel connection system after receiving the charge and discharge current percentage signal;

step 5, determining positive and negative of the charge and discharge current percentage signal, and setting a weight coefficient k based on the positive and negative of the charge and discharge current percentage signal;

step 6, setting a first battery current reference value Iref1, designing a control loop ② and a control loop ③, obtaining a second battery current reference value Iref2 and a third battery current reference value Iref3 by the control loop ② and the control loop ③, and calculating a battery current reference value Iref based on the first battery current reference value Iref1, the second battery current reference value Iref2 and the third battery current reference value Iref3;

step 7, designing a control loop ④, obtaining switch control signals of a switch tube S2 and a switch tube S3 based on the control loop ④, and controlling the switch tube S2 and the switch tube S3 to turn on and off, to control a battery charge and discharge current;

step 8, performing step 4 to step 7 by all machines in the hybrid energy storage inverter parallel connection system after receiving the charge and discharge current percentage signal sent by the host.

furthermore, step 2 further includes the following steps:

collecting the power of the grid-connected port of the parallel connection system as Pexport by the host through a CT or an electricity meter, and collecting the utility voltage and the output current of the inverter by the host and the slaves through a DSP, to calculate output power Pac of the inverter.

furthermore, step 3 further includes the following steps:

setting the power limit of the grid-connected port as PexportLimit by an user, in a self-generation and self-consumption mode, setting PexportLimit to zero, obtaining PexportLimit and the power of the grid-connected port Pexport by the host, outputting a charge and discharge current percentage signal Iratio based on the control loop ① and a difference between PexportLimit and Pexport, through the PI controller, wherein a positive value indicates that a battery is charging, a negative value indicates that the battery is discharging, and the host transmits the charge and discharge current percentage signal Iratio to all machines in the parallel connection system.

furthermore, step 4 further includes the following steps:

calculating the weight coefficient k based on their respective battery capacity soc by each machine in the parallel connection system after receiving the Iratio signal;

defining a charging weight coefficient as k_charge, and defining a discharging weight coefficient as k_discharge;

wherein the charging weight coefficient k_charge and the discharging weight coefficient k_discharge are calculated as follows:

when soc is less than 20%, k_charge=0.7; when soc is greater than 90%, k_charge=0.3; other k_charge=0.7-(soc -20%) $\times$ (0.7-0.3)/(90% -20%);

k_discharge = 1 - k_charge;

a minimum value of the weight coefficient is 0.3, and a limit value of Iratio is -100%/0.3 ~ +100%/0.3.

furthermore, step 5 further includes the following steps:

determining the positive and negative of Iratio;

wherein when Iratio is greater than zero, the power of the grid-connected port of the parallel connection system exceeds a limit, the battery needs to be charged, and the weight coefficient k is equal to k_charge;

wherein when Iratio is less than zero, a load takes power from a utility, the battery needs to be discharged, and the weight coefficient k is equal to k_discharge; when Iratio is equal to zero, the battery is not charged and not discharged.

furthermore, step 6 further includes the following steps:

step 6.1, multiplying Iratio by the weight coefficient, and multiplying it by a maximum allowable charge and discharge current value Imax of a machine to obtain the first battery current reference value Iref1;

step 6.2, wherein the control loop ②, PacRef is an output power limit of a single machine, PacRef is greater than zero indicates that discharge to the utility, PacRef is less than zero indicates that take power from the utility, when it is necessary to charge the battery from the utility, PacRef is a power reference value for charging the battery, and other PacRef is a maximum output power limit of a single machine; Pac is an AC output power of a single machine; based on the control loop ② and a difference between PacRef and Pac, through the PI controller, the second battery current reference value Iref2 is output;

step 6.3, wherein the control loop ③, BusRef indicates an AC bus voltage reference value, and a calculation formula for BusRef is as follows:

BusRef = Urms $\times$ 1.414 + 30, wherein Urms indicates an effective value of the utility voltage; Ubus indicates an AC bus voltage sampling value, based on the control loop ③ and a difference between BusRef and Ubus, through the PI controller, the third battery current reference value Iref3 is output;

step 6.4, wherein IchargeLimit indicates that a maximum allowable charging current limit value obtained by the machine based on a specification definition, a battery BMS charging current limit value, and an over temperature charging current limit value; IdischargeLimit indicates that a maximum allowable discharging current limit value obtained by the machine based on the specification definition, the battery BMS discharging current limit value, and the over temperature discharging current limit value;

step 6.5, after taking a large value between Iref1 and Iref2, taking a small value between the large value and Iref3 and IchargeLimit, and taking a large value between the small value and IdischargeLimit, and finally obtaining the battery current reference value Iref.

furthermore, step 7 further includes the following steps:

outputting a switch modulation signal duty of a battery side DC/DC converter based on the control loop ④ and a difference between the battery current reference value Iref and a battery current sampling value Ibat, through the PI controller, performing pulse width modulation (PWM) transformation on duty to obtain the switch control signals of the switch tube S2 and the switch tube S3, wherein the switch tube S2 and the switch tube S3 are controlled to turn on and off, to control the battery charge and discharge current.

the charge and discharge power balance distribution control method for the hybrid energy storage inverter parallel connection system of the present application has the following advantages:

1. the present application can realize the grid-connected between different power models without the limitation of the number of parallel units.

2. for the hybrid energy storage inverter parallel connection system, the present application can adjust the charge and discharge current of each single battery based on the remaining capacity of each single battery in the parallel connection system. Thus, the batteries with high capacity are discharged more and charged less, and the batteries with low capacity are discharged less and charged more, and finally the battery capacity can be equalized;

3. for the parallel operation of different power models, the present application can allocate the system charge and discharge currents based on the maximum charge and discharge currents of the batteries, the machine with the largest charge and discharge current will be charged or discharged more often, furthermore, it is possible to achieve the optimal thermal equilibrium conditions for each machine in the parallel connection system;

4. when the grid-connected power limitation occurs in the hybrid energy storage inverter parallel connection system, if there is a single hybrid energy storage machine connected to the photovoltaic module with sufficient power, it is possible to realize the excess power of the photovoltaic module to charge all the batteries in the parallel connection system, so that the energy of the photovoltaic module can be optimally utilized, thus avoiding the waste of energy;

5. during the operation of the parallel connection system, if a slave machine exits the parallel connection system due to a fault, or if a fault is cleared and rejoins the parallel connection system, it does not affect the power control effect of the grid-connected ports of the parallel connection system; the power control effect of the grid-connected port is not affected by the new machines joining the parallel connection system or leaving the parallel connection system.

BRIEF DESCRIPTION OF THE DRAWINGS

FIG. 1 is a circuit diagram of a hybrid energy storage inverter parallel connection system according to an embodiment of the present application.

FIG. 2 is a control block diagram of the charge and discharge power balance distribution for the hybrid energy storage inverter parallel connection system according to an embodiment of the present application.

DETAILED DESCRIPTION

In order to better understand the objectives, the structure and the functions of the present application, a charge and discharge power balance distribution control method for a hybrid energy storage inverter parallel connection system of the present application is described in further detail below, taken in conjunction with the accompanying drawings.

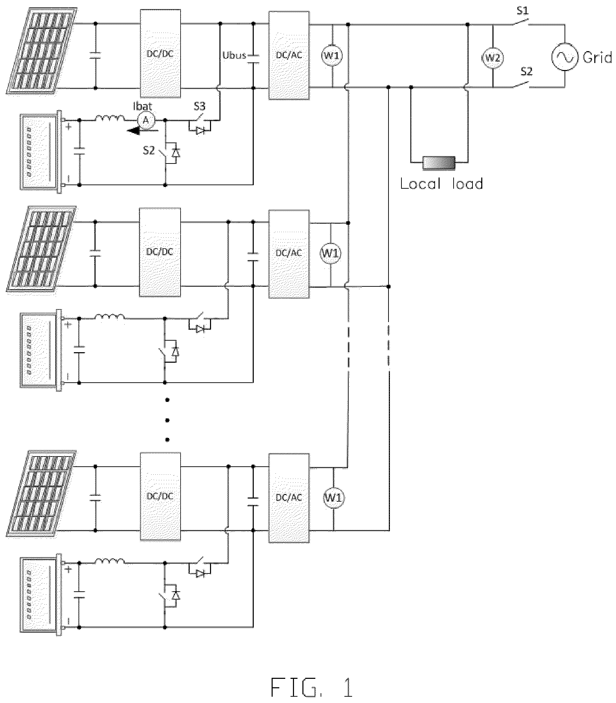

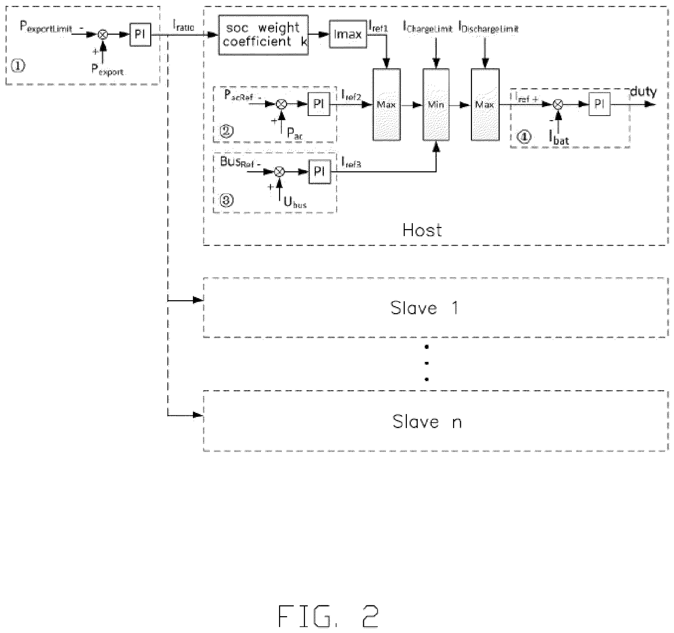

FIG. 1 illustrates a hybrid energy storage inverter parallel connection system, FIG. 2 illustrates a charge and discharge power balance distribution control method for the hybrid energy storage inverter parallel connection system in accordance with an embodiment of the present application, the method includes the following steps:

At step 1, set one machine of the hybrid energy storage inverter parallel connection system as a host and the other machines as the slaves.

At step 2, collect power of the grid-connected port of the parallel connection system, utility voltage, and output current of the inverter, and calculate output power of the inverter;

The host collects the power of the grid-connected port of the parallel connection system through CT or electricity meter as Pexport, and the host and the slaves collect the utility voltage and the output current of the inverter through DSP to calculate the output power of the inverter Pac.

At step 3, set a power limit of the grid-connected port, design a control loop ①, and output a charge and discharge current percentage through the control loop ①;

The user sets the power limit of the grid-connected port to PexportLimit, and PexportLimit is set to zero in the self-generation and self-consumption mode. The host obtains PexportLimit and the power of the grid-connected port Pexport, based on the control loop ① and a difference between PexportLimit and Pexport, through the PI controller, the charge and discharge current percentage Iratio is output. The positive value indicates that the battery is charging, the negative value indicates that the battery is discharging, and the host transmits the charge and discharge current percentage Iratio to all machines in the parallel connection system;

At step 4, each machine in the parallel connection system receives the charge and discharge current percentage signal, and calculates the weight coefficient based on their respective battery capacity;

After receiving the Iratio signal, each machine in the parallel connection system calculates the weight coefficient k based on their respective battery capacity soc;

When the battery is charging, the machine with low battery capacity is expected to charge more, and when the battery needs to be discharged, the machine with low battery capacity is required to discharge less, therefore for battery charging and discharging, the weight coefficients are different, the weight coefficient at charging is defined as k_charge, and the weight coefficient at discharging is defined as k_discharge;

The charging weight coefficient k_charge and the discharging weight coefficient k_discharge are calculated as follows:

When soc is less than 20%, k_charge=0.7; when soc is greater than 90%, k_charge=0.3; other k_charge=0.7-(soc -20%) $\times$ (0.7-0.3)/(90% -20%);

k_discharge = 1 - k_charge;

It can be known that the minimum value of the weight coefficient is 0.3, in order to achieve the ability of 100% full charge or full discharge for both high soc battery and low soc battery when full current discharge and full current charging are required, the limit value of Iratio should be -100%/0.3 ~ +100%/0.3, and in practical applications, it should be taken as -334% ~ +334%.

Step 5: determine the positive and negative of the charge and discharge current percentage signal, and set a weight coefficient k based on the positive and negative of the charge and discharge current percentage signal;

determine the positive and negative of Iratio, when Iratio is greater than zero, it indicates that the power of the grid-connected port of the system exceeds the limit, the battery needs to be charged, and the weight coefficient k is equal to k_charge; when Iratio is less than zero, the load takes power from the utility, the battery needs to be discharged, and the weight coefficient k is equal to k_discharge; when Iratio is equal to zero, it indicates that the battery is not charged and not discharged.

At step 6, set a first battery current reference value Iref1, design a control loop ② and a control loop ③, obtain a second battery current reference value Iref2 and a third battery current reference value Iref3 by the control loop ② and the control loop ③, and calculate a battery current reference value Iref based on the first battery current reference value Iref1, the second battery current reference value Iref2 and the third battery current reference value Iref3;

At step 6.1, multiply Iratio by the weight coefficient, and then multiply it by the maximum allowable charge and discharge current value Imax of the machine to obtain the first battery current reference value Iref1;

At step 6.2, control loop ②, PacRef is an output power limit of a single machine, PacRef is greater than zero indicates that discharge to the utility, PacRef is less than zero indicates that take power from the utility, when it is necessary to charge the battery from the utility, PacRef is a power reference value for charging the battery, and the other PacRef is a maximum output power limit of a single machine; Pac is the AC output power of a single machine; based on the control loop ② and a difference between PacRef and Pac, through the PI controller, the second battery current reference value Iref2 is output;

At step 6.3, control loop ③, BusRef indicates an AC bus voltage reference value, and the calculation formula for BusRef is as follows:

BusRef = Urms × 1.414 + 30, Urms indicates the effective value of the utility voltage.
Ubus indicates the AC bus voltage sampling value, based on the control loop ③ and a difference between BusRef and Ubus, the third battery current reference value Iref3 is output after the PI controller;

At step 6.4, IchargeLimit indicates that a maximum allowable charging current limit value obtained by the machine based on a specification definition, a battery BMS charging current limit value, and an over temperature charging current limit value; IdischargeLimit indicates that a maximum allowable discharging current limit value obtained by the machine based on the specification definition, the battery BMS discharging current limit value, and the over temperature discharging current limit value;

At step 6.5, after taking a large value between Iref1 and Iref2, take a small value between the large value and Iref3 and IchargeLimit, and finally take a large value between the small value and IdischargeLimit, and finally obtain the battery current reference value Iref.

At step 7, design a control loop ④, obtain the switch control signals of the switch tube S2 and the switch tube S3 based on the control loop ④, and control the switch tube S2 and the switch tube S3 to turn on and off, so as to control the battery charge and discharge current;

based on the control loop ④ and a difference between the battery current reference value Iref and the battery current sampling value Ibat, through the PI controller, the switch modulation signal duty of the battery side DC/DC converter is output, then the duty undergoes pulse width modulation (PWM) transformation, to obtain the switch control signals of the switch tube S2 and the switch tube S3. The switch tube S2 and the switch tube S3 are controlled to turn on and off, to control the battery charge and discharge current.

At step 8, all machines in the hybrid energy storage inverter parallel connection system follow steps 4-7 after receiving the charge and discharge current percentage signal Iratio sent by the host.

Embodiment:

When PexportLimit is set to zero, it indicates that the parallel connection system grid-connected power zero output control, based on the control block diagram of the hybrid energy storage inverter parallel connection system shown in FIG. 2, the host obtains the power of the grid-connected port Pexport through the CT or the electricity meter, based on the control loop ① and the difference between PexportLimit and Pexport, through the PI controller, the charge and discharge current percentage Iratio is output. When the energy of the photovoltaic module is sufficient, the energy of the photovoltaic module is supplied to the load, the excess energy is charged to the battery, and Iratio is greater than zero. if only the photovoltaic module of the first machine have good lighting conditions and sufficient energy, and the photovoltaic modules of other machines have poor lighting conditions and have less energy, in this case, the photovoltaic module of the first machine will output energy to supply the load, and the excess energy can allow all machines in the parallel connection system to charge the battery through the Iratio command calculated by the host, this realizes that the energy of the photovoltaic module of the first machine can charge the batteries of the other machines, so that the energy of the photovoltaic module is used optimally and waste is avoided.

It is understood that the present application is described by means of a number of embodiments, and it is known to those skilled in the art that various changes or equivalent substitutions can be made to these features and embodiments without departing from the spirit and scope of the present application. In addition, under the teachings of the present application, these features and embodiments may be modified to suit specific situations and materials without departing from the spirit and scope of the present application. Therefore, the present application is not limited by the specific embodiments disclosed herein, and all embodiments falling within the scope of the claims of the present application are within the scope of protection of the present application.

## Claims

1. A charge and discharge power balance distribution control method for a hybrid energy storage inverter parallel connection system comprising:

   step 1, setting one machine of the hybrid energy storage inverter parallel connection system as a host and other machines as a slaves;

   step 2, collecting power of a grid-connected port of the parallel connection system, utility voltage, and output current of an inverter, and calculating output power of the inverter;

   step 3, setting a power limit of the grid-connected port, designing a control loop ①, and outputting a charge and discharge current percentage signal through the control loop ①;

   step 4, calculating weight coefficient based on their respective battery capacity by each machine in the parallel connection system after receiving the charge and discharge current percentage signal;

   step 5, determining positive and negative of the charge and discharge current percentage signal, and setting a weight coefficient k based on the positive and negative of the charge and discharge current percentage signal;

   step 6, setting a first battery current reference value Iref1, designing a control loop ② and a control loop ③, obtaining a second battery current reference value Iref2 and a third battery current reference value Iref3 by the control loop ② and the control loop ③, and calculating a battery current reference value Iref based on the first battery current reference value Iref1, the second battery current reference value Iref2 and the third battery current reference value Iref3;

   step 7, designing a control loop ④, obtaining switch control signals of a switch tube S2 and a switch tube S3 based on the control loop ④, and controlling the switch tube S2 and the switch tube S3 to turn on and off, to control a battery charge and discharge current;

   step 8, performing step 4 to step 7 by all machines in the hybrid energy storage inverter parallel connection system after receiving the charge and discharge current percentage signal sent by the host.

2. The charge and discharge power balance distribution control method for the hybrid energy storage inverter parallel connection system according to claim 1, wherein step 2 further comprises:
   collecting the power of the grid-connected port of the parallel connection system as Pexport by the host through a CT or an electricity meter, and collecting the utility voltage and the output current of the inverter by the host and the slaves through a DSP, to calculate output power Pac of the inverter.

3. The charge and discharge power balance distribution control method for the hybrid energy storage inverter parallel connection system according to claim 2, wherein step 3 further comprises:

   Setting the power limit of the grid-connected port as PexportLimit by an user, in a self-generation and self-consumption mode, setting PexportLimit to zero, obtaining PexportLimit and the power of the grid-connected port Pexport by the host, outputting a charge and discharge current percentage signal Iratio based on the control loop ① and a difference between PexportLimit and Pexport, through the PI controller, wherein a positive value indicates that a battery is charging, a negative value indicates that the battery is discharging, and the host transmits the charge and discharge current percentage signal Iratio to all machines in the parallel connection system.

4. The charge and discharge power balance distribution control method for the hybrid energy storage inverter parallel connection system according to claim 3, wherein step 4 further comprises:

calculating the weight coefficient k based on their respective battery capacity soc by each machine in the parallel connection system after receiving the charge and discharge current percentage signal Iratio;
defining a charging weight coefficient as k_charge, and defining a discharging weight coefficient as k_discharge;
wherein the charging weight coefficient k_charge and the discharging weight coefficient k_discharge are calculated as follows:

when soc is less than 20%, k_charge=0.7; when soc is greater than 90%, k_charge=0.3; other k_charge=0.7-(soc -20%) $\times$ (0.7-0.3)/(90% -20%);

$$k\_discharge = 1 - k\_charge;$$

a minimum value of the weight coefficient is 0.3, and a limit value of Iratio is -100%/0.3 ~ +100%/0.3.

5. The charge and discharge power balance distribution control method for the hybrid energy storage inverter parallel connection system according to claim 4, wherein step 5 further comprises:

determining the positive and negative of Iratio;
wherein when Iratio is greater than zero, the power of the grid-connected port of the parallel connection system exceeds a limit, the battery needs to be charged, and the weight coefficient k is equal to k_charge;
wherein when Iratio is less than zero, a load takes power from a utility, the battery needs to be discharged, and the weight coefficient k is equal to k_discharge; when Iratio is equal to zero, the battery is not charged and not discharged.

6. The charge and discharge power balance distribution control method for the hybrid energy storage inverter parallel connection system according to claim 5, wherein step 6 further comprises:

step 6.1, multiplying Iratio by the weight coefficient, and multiplying it by a maximum allowable charge and discharge current value Imax of a machine to obtain the first battery current reference value Iref1;
step 6.2, wherein the control loop ②, PacRef is an output power limit of a single machine, PacRef is greater than zero indicates that discharge to the utility, PacRef is less than zero indicates that take power from the utility, when it is necessary to charge the battery from the utility, PacRef is a power reference value for charging the battery, and other PacRef is a maximum output power limit of a single machine; Pac is an AC output power of a single machine; based on the control loop ② and a difference between PacRef and Pac, through the PI controller, the second battery current reference value Iref2 is output;
step 6.3, wherein the control loop ③, BusRef indicates an AC bus voltage reference value, and a calculation formula for BusRef is as follows:

BusRef = Urms $\times$ 1.414 + 30, wherein Urms indicates an effective value of the utility voltage; Ubus indicates an AC bus voltage sampling value, based on the control loop ③ and a difference between BusRef and Ubus, through the PI controller, the third battery current reference value Iref3 is output;
step 6.4, wherein IchargeLimit indicates that a maximum allowable charging current limit value obtained by the machine based on a specification definition, a battery BMS charging current limit value, and an over temperature charging current limit value; IdischargeLimit indicates that a maximum allowable discharging current limit value obtained by the machine based on the specification definition, the battery BMS discharging current limit value, and the over temperature discharging current limit value;
step 6.5, after taking a large value between Iref1 and Iref2, taking a small value between the large value and Iref3 and IchargeLimit, and taking a large value between the small value and IdischargeLimit, and finally obtaining the battery current reference value Iref.

7. The charge and discharge power balance distribution control method for the hybrid energy storage inverter parallel connection system according to claim 6, wherein step 6 further comprises:
outputting a switch modulation signal duty of a battery side DC/DC converter based on the control loop ④ and a difference between the battery current reference value Iref and a battery current sampling value Ibat, through the PI controller, performing pulse width modulation (PWM) transformation on duty to obtain the switch control signals of the switch tube S2 and the switch tube S3, wherein the switch tube S2 and the switch tube S3 are controlled to turn on and off, to control the battery charge and discharge current.

FIG. 1

FIG. 2

## INTERNATIONAL SEARCH REPORT

| International application No. |
| --- |
| **PCT/CN2022/098332** |

| **A.** | **CLASSIFICATION OF SUBJECT MATTER** |
| --- | --- |

H02J 7/00(2006.01)i

According to International Patent Classification (IPC) or to both national classification and IPC

| **B.** | **FIELDS SEARCHED** |
| --- | --- |

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

WPI, EPODOC, CNPAT, CNKI: 逆变, 并, 权重, 电池容量, 电流, 充, 放, 正, 负, inverter, SOC, current, charge, discharge, positive, negative

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 114039371 A (ZHEJIANG SOLAX POWER NETWORK ENERGY TECHNOLOGY CO., LTD.) 11 February 2022 (2022-02-11) description, paragraphs 51-194, and figures 1-4 | 1-3 |
| A | CN 112415402 A (ZHEJIANG NIULIAN TECHNOLOGY CO., LTD.) 26 February 2021 (2021-02-26) entire document | 1-7 |
| A | CN 111756046 A (SUNGROW POWER SUPPLY CO., LTD.) 09 October 2020 (2020-10-09) entire document | 1-7 |
| A | CN 113224743 A (SICHUAN ENERGY INTERNET RESEARCH INSTITUTE, TSINGHUA UNIVERSITY) 06 August 2021 (2021-08-06) entire document | 1-7 |
| A | JP 2000012103 A (NISSAN MOTOR CO., LTD.) 14 January 2000 (2000-01-14) entire document | 1-7 |
| A | CN 112600249 A (PINGDINGSHAN POWER SUPPLY CO., STATE GRID HENAN ELECTRIC POWER CO., LTD.) 02 April 2021 (2021-04-02) entire document | 1-7 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 November 2022** | **25 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/098332** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 111293720 A (GOODWE JIANGSU POWER SUPPLY TECH CO., LTD.) 16 June 2020 (2020-06-16)<br>entire document | 1-7 |

Form PCT/ISA/210 (second sheet) (January 2015)

**INTERNATIONAL SEARCH REPORT**
**Information on patent family members**

International application No.

**PCT/CN2022/098332**

| Patent document cited in search report | | | Publication date (day/month/year) | Patent family member(s) | Publication date (day/month/year) |
|---|---|---|---|---|---|
| CN | 114039371 | A | 11 February 2022 | None | |
| CN | 112415402 | A | 26 February 2021 | None | |
| CN | 111756046 | A | 09 October 2020 | None | |
| CN | 113224743 | A | 06 August 2021 | None | |
| JP | 2000012103 | A | 14 January 2000 | None | |
| CN | 112600249 | A | 02 April 2021 | None | |
| CN | 111293720 | A | 16 June 2020 | None | |

Form PCT/ISA/210 (patent family annex) (January 2015)